Europäisches Patentamt

European Patent Office

Office européen des brevets

(11) Publication number: **0 251 638 B1**

## EUROPEAN PATENT SPECIFICATION

(45) Date of publication of patent specification: **22.04.92**

(51) Int. Cl.⁵: **C12P 19/04**, C08B 37/00, E21B 43/25, E21B 43/22

(21) Application number: **87305549.5**

(22) Date of filing: **23.06.87**

(54) **Aqueous gel compositions derived from succinoglycan.**

(30) Priority: **30.06.86 US 880606**

(43) Date of publication of application:
**07.01.88 Bulletin 88/01**

(45) Publication of the grant of the patent:
**22.04.92 Bulletin 92/17**

(84) Designated Contracting States:
**AT BE CH DE ES FR GB GR IT LI LU NL SE**

(56) References cited:
**EP-A- 0 040 445**
**US-A- 3 915 800**

(73) Proprietor: **PFIZER INC.**
**235 East 42nd Street**
**New York, N.Y. 10017(US)**

(72) Inventor: **Dasinger, Bruce L.**
**12, Stone Cliff Drive**
**Niantic Connecticut(US)**
Inventor: **McArthur, Hamish A. I.**
**19, Pheasant Run Drive**
**Gales Ferry Connecticut(US)**

(74) Representative: **Moore, James William, Dr.**
**Pfizer Limited Ramsgate Road**
**Sandwich Kent CT13 9NJ(GB)**

Rank Xerox (UK) Business Services

**Description**

This invention relates to novel aqueous gel compositions, to methods of making these novel aqueous gel compositions, to methods of using these novel aqueous gel compositions in the enhanced recovery of petroleum from subterranean hydrocarbon-bearing formations, and to microorganisms producing polymers used to form the gel-forming compositions.

Petroleum, a vital commodity in modern society, is found in subterranean deposits or reservoirs, commonly called hydrocarbon-bearing formations. In recovering petroleum from such hydrocarbon-bearing formations, so called "primary recovery methods", utilizing only the forces naturally present in the formation usually yield only a small fraction of the available petroleum. Consequently, a variety of supplemental methods, often termed "secondary recovery" methods or operations, have been developed for recovery of the remainder of the petroleum.

One of the more commonly-used secondary recovery methods involves flooding the hydrocarbon-bearing formation with a fluid, the term "fluid" encompassing both liquids and gases. When the fluid is a liquid, the procedure is termed waterflooding and involves the introduction of water or a water-containing fluid, such as brine, into the hydrocarbon-bearing formation in order to displace the petroleum to a suitable production or collection system through which it can then be recovered.

A common difficulty encountered in waterflooding is that the injected liquid does not move with a uniform front; rather it tends to form channels through certain portions of the reservoir, thereby bypassing or poorly sweeping other portions. In attempts to minimize this inefficent sweeping, or "fingering", a variety of thickening or viscosifying agents can be added to the waterflood to control its mobility. This "mobility control" technique for enhancing the efficiency of secondary recovery methods in petroleum recovery has met with some success.

However, a further problem exists in that hydrocarbon-bearing formations often contain areas of high permeability, termed "thief zones", into which the waterflood preferentially flows. The presence of these high permeability zones leaves low permeability zones poorly swept, thereby resulting in decreased petroleum recovery since these low permeability zones can also contain a good deal of petroleum. Thus, overall efficiency of petroleum recovery can be achieved by plugging or reducing the permeability of the thief zones, thereby improving waterflood by diverting the waterflood instead into the hydrocarbon-rich zones. Such an approach is termed "permeability reduction" or "profile modification". Methods of permeability reduction are disclosed in, for example, United States Patent Nos. 3,243,000, 3,396,790, 3,522,844, 4,040,484 and 4,048,079. The above patents disclose either aqueous gels or microbially-derived polysaccharides as plugging agents.

United States Patent No. 4,400,466 and European Patent Application No. 0,040,445 disclose the use of certain microbially derived heteropolysaccharides, called succinoglycans, as thickening agents.

None of the above patents disclose the use of compositions comprising aqueous gels derived from cross-linking succinoglycans nor do they disclose the use of cross-linked succinoglycan gels as profile modifying agents. Accordingly, it is an object of the lu present invention to provide a novel, aqueous gel-forming composition having superior gel strength per unit weight of polymer. It is another object of the present invention to provide a method for reducing the permeability of thief zones in subterranean hydrocarbon-bearing formations for the purpose of increasing the efficiency of secondary petroleum-recovery methods by the use of such gels.

In one embodiment, the present invention comprises a gel-forming composition comprising an aqueous fluid having incorporated therein (a) a gel-forming amount of a succinoglycan biopolymer and (b) an effective amount of a water-soluble polyvalent metal cation capable of cross-linking said succinoglycan polymer.

The preferred biopolymers are those heteropolysaccharides which are classified as succinoglycans. These succinoglycans are produced by the action of bacteria of the genera Alcaligenes, Agrobacterium, Pseudomonas and Rhizobium on carbohydrates. The succinoglycans thus produced are heteropolysaccharides comprised of galactose and for each mole of galactose, 6.0-9.0 moles of glucose. These succinoglycans are substituted by acidic functional groups imparting a net negative charge to the heteropolysaccharide; acetate groups may also be present. Additional groups can also be introduced by chemical means as disclosed, for instance, in Great Britain Patent No. 2,127,462A. These heteropolysaccharides which encompass succinoglucans, succinoglucan-or succinoglycan-like polymers will hereinafter be referred to as "succinoglycans".

Preferred succinoglycans are those produced by organisms such as Agrobacterium species with particularly preferred succinoglycans being those produced by novel strains of Agrobacterium radiobacter, biovar 1 isolated from soil samples and deposited with the American Type Culture Collection (ATCC) under the accession numbers ATCC 53028, ATCC 53171, ATCC 53172, ATCC 53173, and ATCC 53174, the characterization of which are presented in Table 1. Also preferred are succinoglycans produced by Agrobacterium tumefaciens IFO 3058, mutants thereof, and non-phytopathogenic variants thereof. Strains of Agrobacterium tumefaciens IFO 3058 and mutants thereof from which the phytopathogenicity-conferring Ti plasmid has been removed are the most preferred.

Other succinoglycans which can be used in the present invention are those produced by microorganisms of the genera Alcaligenes, Pseudomonas or Rhizobium.

Additionally, polysaccharides can also be isolated from other microorganisms into which the genetic information encoding for succinoglycan biosynthesis has been introduced. Techniques for introducing the genetic material are disclosed in United States Patent No. 4,329,448, incorporated herein by reference.

The heteropolysaccharides produced by the above listed microorganisms can also be deacylated, for example, by the use of alkali, and the resulting deacylated heteropolysaccharides can also be used in the composition of the present invention.

Typical polyvalent metal cations capable of crosslinking the succinoglycan are cations from aluminun (III), chromium (III), titanium (IV) ruthenium (III) and zirconium (IV). One preferred cation is chromium (III). Another preferred cation is aluminum (III). Yet another preferred cation is titanium (IV).

The present invention also comprises a method of forming the aqueous gel compositions of the present invention, a method of selectively reducing the permeability of hydrocarbon-bearing subterranean formations by using the novel aqueous gels of the present invention and novel strains of Agrobacterium radiobacter.

The heteropolysaccharides which can be used in preparing the aqueous gels of the present invention are those which are produced by a variety of microorganisms, including those of the genera Pseudomonas, Rhizobium, Alcaligenes and Agrobacterium. Particularly suitable organisms include Pseudomonas species NCIB 11592, Pseudomonas species NCIB 11264, Alcaligenes faecalis var. myxogenes, Agrobacterium radiobacter, Agrobacterium tumefaciens IFO 3058 Rhizobium trifoli, Rhizobium meliloti, and novel strains of Agrobacterium radiobacter biovar 1 isolated from soil samples and deposited with the American Type Culture Collection under the accession numbers ATCC 53028, ATCC 53171, ATCC 53172, ATCC 53173 and ATCC 53174.

The biopolymers used in the present invention can be produced by cultivating the chosen microorganism in an appropriate nutrient medium, the constituents of which are well known to those skilled in the art of polysaccharide producing fermentations, until substantial quantities of heteropolysaccharide are produced. Thus, appropriate nutrient media will usually contain suitable sources of carbon and nitrogen, together with phosphorus, calcium, magnesium and other inorganic ions, and any other trace nutrient required by the particular microorganism selected. The carbon source is a suitable carbohydrate including glucose, sucrose, fructose, mannitol, sorbitol, soluble starch, potato starch and the like. Although glucose is a convenient carbon source, experience has shown that the carbohydrate need not be in a refined state and may instead be utilized as crude materials derived from natural sources; crude molasses and sugar beet juice being examples of this type. The carbon sources are usually present in the medium at concentrations between 10 to 100g/liter and preferably 20-60g/ liter. Suitable nitrogen sources may include organic sources such as soybean meal, corn steep liquor and yeast extract, as well as urea or any ammonium salts or any combination of two or more of the nitrogen sources.

The preferred method of culture is in aqueous media. However, alternative methods may also be employed for polysaccharide production. These include solid state fermentations or immobilized cell systems of the preferred microorganisms. Such solid state techniques and methods of immobilizing microbial cells to produce the polysaccharides are well known in the art.

Fermentation occurs under aerobic conditions. However, the length of time of cultivation and the temperature employed to generate suitable levels of biopolymer vary according to the organism utilized. For example, if the organism employed is an Agrobacterium species, the temperature is preferably between 25° and 35°C and the fermentation time of a batch process is between 50 and 200 hours, preferably 72-96 hours. Similar conditions would be used for other organisms. The fermentation can be carried out as a batch, fed-batch or a continuous operation or by other suitable means.

On completion of the fermentation, the biopolymer may be used in the composition of the present invention in the form of the neat fermentation broth, in the form of the fermentation broth which has been subjected to some form of concentration such as ultrafiltration or may be used after recovery of the heteropolysaccharide therefrom. The heteropolysaccharide can be recovered directly from the whole fermentation broth, or in a more purified form after the broth has been separated from the cells. The heteropolvsaccharide is recovered from the whole or clarified broth by accepted and well known techniques in which the polymer is precipitated following the addition of agents which render the polysaccharide

3

insoluble. Examples of such agents are organic solvents such as methanol, ethanol, isopropanol or acetone, quaternary amines such as cetyltrimethyl-ammonium bromide or cetylpyridinium chloride. The precipitated product may then be recovered by known techniques and dried.

The heteropolysaccharides produced by the above described process and used in the present invention correspond to those well documented in the prior art as succinoglycan or succinoglucan (see EPO Patent 0,040,445). The polysaccharide has been identified as possessing an octasaccharide repeating unit comprising seven D-glucose residues and a single D-galactose residue. The heteropolysaccharide additionally contains variable proportions of acid residues such as pyruvate, succinate and acetate.

It is well documented in the prior art that such variations may be due to the microorganism employed for the preparation of the heteropolysaccharide, the exact conditions of cultivation, material heterogeneity and the analytical techniques employed.

The heteropolysaccharide thus produced can be used in the ccmposition of the present invention in a whole broth, dried broth or concentrated broth form. Concentrated broth forms can be produced by ultrafiltration at high shear rate or by evaporation. In addition, the heteropolysaccharide can also be deacylated by the use of alkali such as sodium or potassium hydroxide and the deacylated heteropolysaccharide can also be used in the composition and methods of the present invention. Techniques for the deacylation of the heteropolysaccharide are well known (e.g. U.S. 3,096,293) and the deacylated heteropolysaccharide thus produced can be used in the composition and method of the present invention in any of the previously described forms. If a liquid form is used, it is preferable to add a conventional biocide, (e.g. formaldehyde, at 2000 to 5000 mg/liter) to prevent spoilage.

The amount of biopolymer used in the permeability reduction process of the present invention can vary depending upon the particular biopolymer used and the properties desired in the aqueous gels of the invention. In general, the amount of biopolymer will be a water-thickening amount, i.e. at least an amount which will significantly thicken the water to which it is added. Generally, use levels range from 0.005 to 1 weight percent of the aqueous fluid, with a preferred range of 0.03 to 0.06 weight percent of the aqueous fluid. (300-600 mg/liter). These are not intended to be limits to the levels of use and other levels may be used depending on conditions within the petroleum-bearing formation such as permeability profile, salinity, pH, etc.. In general, with the proper amounts of polyvalent metal cation, the amount of biopolymer used will determine the consistency of the gel obtained. Generally speaking, small amounts of biopolymer will usually produce liquid mobile gels which can be readily pumped whereas large amounts of biopolymer will usually produce stiff rigid gels. If desired, such stiff gels can be "thinned" by dilution to any concentration of biopolymer. This can be done by mechanical means; e.g. stirring, pumping or by means of a suitable turbulence inducing device to cause shearing, such as a jet nozzle. Thus, the upper limit on the amount of biopolymer which may be used is not fixed but depends upon equipment, use, etc. However, when a liquid mobile gel is desired, it is preferred to dilute the more concentrated gels before they become rigid.

The cross-linking agents employed in the composition of the present invention are preferably polyvalent metal cations. These polyvalent metal cations are selected from metals in Groups III to VIII of the Periodic Table of the Elements. Examples of such polyvalent metal cations include aluminum (III), chromium (III), ruthenium (III), titanium (IV) and zirconium (IV). One preferred metal cation is chromium (III). Another preferred metal cation is aluminum (III). Yet another preferred metal cation is titanium (IV).

The cross-linking agents employed are preferably water soluble trivalent chromium compounds such as chromium chloride, chromium nitrate, basic chromium sulfate, chromium ammonium sulfate, chromium potassium sulfate and the like. Other water-soluble compounds yielding polyvalent cations may also be used. Examples of these compounds include aluminum chloride, ferric chloride, manganese dichloride, magnesium aluminum silicate, aluminum acetate, cobalt nitrate, manganese nitrate, nickel sulfate, rubidium hydroxide, ruthenium chloride, antimony compounds (SBE-168, Amspec, Gloucester, N.J.), titanium compounds (TYZOR[R]AA, E.I. Dupont de Nemours Co.) vanadium chloride and zirconium compounds (ZIRTECH[R]AA, Zirtech, Inc. Gainesville, Fla.).

Metal compounds which can also be used in the practice of the invention are water-soluble compounds of polyvalent metals wherein the metal is present in a valence state which is capable of being reduced to a lower polyvalent valence state. Examples of such compounds include potassium permanganate, sodium permanganate, ammonium chromate, ammonium dichromate, the alkali metal chromates, and the alkali metal dichromates. The above listed metal compounds are encompassed by the term "polyvalent metal cation" Combinations of two or more polyvalent metal cations, i.e. chromium and aluminum, nickel, manganese and cobalt, can also be used.

Generally, the concentration of the metal compound will range from about 6-72ppm (1 to 25 weight percent of the biopolymer). However, this does not restrict the concentration of metal compound which can be used. The ultimate concentration of the metal compound will depend upon several factors including the concentration of biopolymer to be used, the type of aqueous medium used, the type of gel product desired, and the use of the gel.

The present invention uses the term "aqueous medium" generically in the specification and in the claims. This term includes fresh water, brines, tap and distilled water and other aqueous media with or without additives which can be gelled in accordance with the invention.

Various methods can be used for preparing the aqueous gels of the present invention. The metal containing compound can be added to a solution of the biopolymer or the biopolymer and metal-containing compound can be mixed simultaneously. Where possible, the preferred method is to dissolve the biopolymer in the aqueous medium and then add the metal compound.

Upon addition of the polyvalent metal cation, gelation generally becomes obvious in about 3-24 hours. If desired, gelation can be further delayed by the use of an appropriate chelating agent. Chelating agents which can be used include mono-, di-, or tri-carboxylic acids or their metal salts, especially citrate, oxalate and malate metal salts.

In general, pH is not controlling in gel formation, although gelation is retarded at pH extremes. If desired, the pH can be adjusted by the addition of a suitable acid, base or buffering agent. In general, temperature is also not controlling in gel formation.

The aqueous gels of the present invention are particularly useful in profile modification, or permeability reduction, of subterranean hydrocarbon-bearing formations. In practice, a gel of the present invention is pumped down a well and into a formation in any suitable manner, any suitable amount, and for any desired period of time sufficient to obtain the desired in-depth penetration and decrease in permeability of the high-permeability zones of the formation. Usually, an in-depth penetration of from 10 to 1,000, preferably 75 to 900, feet from the well will be sufficient. This range will, of course, vary with the formation and penetrations outside these ranges can be used.

In the above operation, the injection of the gel can be carried out in a conventional manner. Although gels injected in accordance with the invention can be prepared in advance and stored in storage tanks, in the preferred method, the polyvalent metal compound and biopolymer are mixed on the surface and the resulting gel is then injected directly into the well.

As indicated above, the aqueous gels of the present invention are particularly useful in permeability modification of subterranean reservoirs. These subterranean reservoirs can be found in either production or injector wells and the novel gels of the present invention can be used in processes for permeability modification of such wells. Known examples of injector and producer wells and methods of waterflooding and analysis of patterning these wells to maximize secondary oil recovery may be found in Uren, L.C., Petroleum Production Engineering - Oil field Exploration, 2nd Ed, McGraw-Hill Book Company Inc., New York and London, 1939 and more particularly in the section entitled "The Water-Flooding Process" appearing at pages 444-459, said material being incorporated herein by reference.

In the practice of this invention in combination with a conventional water flood operation, it is usually advantageous to start the flooding operation in a conventional manner by the injection of aqueous displacement fluid into the well. Following the procedures set forth in the Uren reference, the point of water breakthrough is ascertained at which point the fluid flooding is arrested, or shut off. The well is then treated with the gel-forming composition of the present invention using any of the previously described methods. After the gelation is complete and the permeability of the formation is reduced, the fluid flooding is resumed. In other cases, the methods of the present invention can be applied subsequent or prior to water breakthrough.

Having described the invention in general terms, reference is now made to specific examples thereof.

5

## TABLE 1

Characterization of Agrobacterium radiobacter, biovar 1 ATCC 53028 ('028) and ATCC 53171 ('171), 53172 ('172), 53173 ('173), and 53174 ('174)

The morphological, biochemical and phytopathogenic characteristics of the novel soil microorganisms, detailed below, are consistent with their identification as Agrobacterium radiobacter, biovar 1, according to Bergey's Manual of Systematic Bacteriology, Volume 1 (Williams and Wilkins, Baltimore, 1984)

### Biochemistry and Physiology

|  | '171 | '172 | '173 | '174 | '028 |
|---|---|---|---|---|---|
|  | 1 | 2 | 3 | 4 | 5 |
| Gram positive | − | − | − | − | − |
| Gram negative | + | + | + | + | + |
| Gram variable | − | − | − | − | − |
| Motile at 37°C | − | − | + | NT | NT |
| Motile at RT | + | + | + | + | + |
| Flagella peritrichous | + | + | + | + | + |
| Flagella lophotrichous | − | − | − | − | − |
| Flagella monotrichous | − | − | − | − | − |
| Flagella lateral | − | − | − | − | − |
| 4° C growth | + | − | + | − | − |
| 25° C growth | + | + | + | + | + |
| 30° C growth | + | + | + | + | + |
| 37° C growth | + | + | + | + | + |
| 41° C growth | + | − | − | − | − |
| Pigment diffusible | − | − | − | − | − |
| Pigment non-diffusible | − | − | − | − | − |
| Pigment color | − | − | − | − | − |
| Pyocyanine produced | − | − | − | − | − |

6

|  | '171 | '172 | '173 | '174 | '028 |
|---|---|---|---|---|---|
| Fluorescein produced | − | − | − | − | − |
| Melanin pigment produced | − | − | − | − | − |
| pH 6.0 growth | + | + | + | + | + |
| 3% NaCl growth | + | +/− | + | W | − |
| 6.5% NaCl growth | − | − | − | − | − |
| MacConkey agar growth | + | + | + | + | + |
| Skim milk agar growth | + | + | + | + | + |
| Aesculin hydrolysis | + | + | + | + | + |
| Casein hydrolysis | − | − | − | − | − |
| Starch hydrolysis | − | − | − | − | − |
| Gelatinase | − | − | − | − | − |
| Tween 20 hydrolysis | − | − | − | − | − |
| Tween 80 hydrolysis | − | − | − | − | − |
| Indole | − | − | − | − | − |
| Simmons citrate growth | + | + | + | + | + |
| Urease | + | + | + | + | + |
| Nitrate to nitrite | + | + | + | + | + |
| Nitrite reduction | + | + | + | + | + |
| Nitrite to nitrogen gas | − | − | − | − | − |
| Hydrogen sulfide (TSI) | − | − | − | − | + |
| Lysine decarboxylase | − | − | − | − | − |
| Arginine (Mollers) | − | − | − | − | − |
| Ornithine decarboxylase | − | − | − | − | − |
| Phenylalanine deamination | NG | NG | NG | NG | NG |
| Lecithinase | − | − | − | − | − |
| Phosphatase | + | + | + | + |  |
| Catalase | + | + | + | + | + |
| Oxidase | + | + | + | + | + |
| Gluconate oxidation | − | − | − | − | − |
| Growth on malonate as SCS | − | − | − | − | − |
| Tyrosine degradation | − | − | − | − | − |

7

|  | '171 | '172 | '173 | '174 | '028 |
|---|---|---|---|---|---|
| dl-hydroxybutyrate growth | | + | + | + | − |
| PHB accumulation | − | − | − | − | − |
| Deoxyribonuclease | − | − | − | − | − |
| Growth on 0.05% cetrimide | − | − | − | − | − |
| Growth on acetate as SCS | + | + | + | + | + |
| Testosterone degradation | W | W | W | − | − |
| 3-ketolactose | + | + | + | + | + |

W = Weak

NG = No growth

NT = Not tested

### Fermentation of O-F Carbohydrates

|  | '171 | '172 | '173 | '174 | '028 |
|---|---|---|---|---|---|
|  | 1 | 2 | 3 | 4 | 5 |
| Acid from L-arabinose | + | + | + | + | + |
| Acid from cellobiose | + | + | + | + | + |
| Acid from ethanol | + | K | + | + | + |
| Acid from D-fructose | + | + | + | + | + |
| Acid from D-glucose AO2 | + | + | + | + | + |
| Acid from D-glucose AnO2 | − | − | − | − | − |
| Alkaline pH in D-glucose | − | − | − | − | − |
| Acid from glycerol | + | + | + | + | + |
| Acid from i-inositol | + | + | + | + | + |
| Acid from lactose | + | K | + | W | + |
| Acid from maltose | + | + | + | + | + |
| Acid from D-mannitol | + | + | + | + | + |
| Acid from D-mannose | + | + | + | + | + |
| Acid from L-rhamnose | + | + | + | + | + |
| Acid from D-ribose | + | + | + | + | + |
| Acid from sucrose | + | + | + | + | + |
| Acid from trehalose | + | + | + | + | + |
| Acid from D-xylose | + | + | + | + | + |
| CONTROL | K | K | K | K | K |

+ = acid

− = no change

K = alkaline

Sole Carbon Sources in Stanier's Mineral Base

| | '171 | '172 | '173 | '174 | '028 |
|---|---|---|---|---|---|
| | 1 | 2 | 3 | 4 | 5 |
| L-arabinose | + | + | + | + | + |
| cellobiose | + | + | + | + | + |
| D-fructose | + | + | + | + | + |
| D-glucose | + | + | +/- | + | + |
| lactose | + | + | + | + | + |
| maltose | + | + | + | + | + |
| D-mannitol | + | + | + | + | + |
| L-rhamnose | + | + | + | + | + |
| D-ribose | + | + | + | + | + |
| D-sorbitol | + | + | + | + | + |
| sucrose | + | + | + | + | + |
| trehalose | + | + | + | + | + |
| D-xylose | + | + | + | + | + |
| adonitol | + | + | + | + | + |
| glycerol | - | - | - | - | - |
| ethanol | - | - | - | - | W |
| geraniol | - | - | - | - | - |
| i-inositol | + | +/- | - | + | + |
| sebacic acid | - | - | - | - | - |
| acetamide | - | - | - | - | - |
| adipate | - | - | - | - | - |
| benzoate | - | - | - | - | - |
| butyrate | - | - | - | - | - |
| citraconate | - | - | - | - | - |
| D-gluconate | + | + | + | + | + |
| m-hydroxybenzoate | - | - | - | - | - |
| 2-ketogluconate | + | + | + | + | + |
| DL-lactate | + | + | + | + | + |

|  | '171 | '172 | '173 | '174 | '028 |
|---|---|---|---|---|---|
|  | 1 | 2 | 3 | 4 | 5 |
| malate | + | + | + | + | + |
| pelargonate | − | − | − | − | − |
| propionate | − | − | − | + | + |
| quinate | + | + | + | + | + |
| succinate | + | + | + | + | + |
| L-+-tartrate | − | − | − | − | − |
| valerate | − | − | − | − | − |
| -alanine | + | + | + | + | + |
| D- -alanine | + | + | + | + | − |
| betaine | + | + | + | + | + |
| glycine | − | − | − | − | − |
| L-histidine | + | + | + | + | + |
| DL-norleucine | − | − | − | − | W |
| L-proline | + | + | + | + | + |
| D-tryptophan | − | − | − | − | − |
| L-valine | − | − | − | − | − |
| DL-arginine | + | + | + | + | + |
| benzylamine | − | − | − | − | − |
| butylamine | − | − | − | − | − |
| putrescine | − | − | − | − | − |
| mesoconate | − | − | − | − | − |
| DL-glycerate | W | − | W | + | W |
| L-tryptophan | − | − | − | − | − |

W = Weak

Tumorgenicity Studies

Isolates were inoculated onto the surface of carrot slices according to the procedure of:-
Gilstrap, M., Kleyn, J. and Nester, C.W. 1978.
Crown Gall Tumor, a Disease in Plants.
Experiments in Microbiology, 3rd. Ed., Saunders, N.Y.
Results after six weeks:-

10

| ATCC 53028 | Negative |
|---|---|
| ATCC 53171 | Negative |
| ATCC 53172 | Negative |
| ATCC 53173 | Negative |
| ATCC 53174 | Negative |
| ATCC 15955 (Positive Control) | Positive |
| ATCC 19358 (Negative Control) | Negative |
| Uninoculated Carrot | Negative |

EXAMPLE 1

Production of Biopolymer by Cultivation of Agrobacterium tumefaciens IFO 3058

The batch culture inoculum of Agrobacterium tumefaciens IFO 3058 was grown in trypticase soy broth at 30°C for 24 hours on an orbital shaker, and then used to inoculate a fermenter containing the production medium shown below.

| Succinoglycan Medium Composition | |
|---|---|
| | g/l |
| Glucose | 40.0 |
| Corn Steep Liquor | 8.4 |
| $K_2HPO_4$ | 2.5 |
| $MgSO_4.7H_2O$ | 1.0 |
| $NH_4NO_3$ | 0.54 |
| $MnSO_4.H_2O$ | 0.012 |
| $FeSO_4.7H_2O$ | 0.036 |
| $ZnSO_4.7H_2O$ | 0.072 |
| $CuSO_4.5H_2O$ | 0.0032 |
| $CoCl_2.6H_2O$ | 0.0036 |
| Dow Corning Antifoam A, water | |
| pH was 7.4 | |

The inoculum was added at a final concentration of 3% to a 14 liter New Brunswick fermentation vessel containing 8 liters of production medium. The culture temperature was maintained at 28°C. Agitation was carried out with 2 New Brunswick propellors at a speed of 500 rpm; air was introduced into the vessels at a rate of 4 litres/min. At the completion of the fermentation (96h), the broth viscosity was 6,400 cps as determined with a Brookfield LVTD Viscometer, No. 4 spindle, 30 rpm. The pH of the broth was 5.5.

The fermentation broth was clarified by dilution with 3 volumes of water and subsequent centrifugation at 12,000 × g for 20 minutes. The heteropolysaccharide was precipitated from the clarified broth by the addition of 2.5 g/l of NaCl followed by two volumes of isopropanol. The heteropolysaccharide was removed, pressed on a screen of 100 mesh to remove residual liquid, and vacuum dried. The biopolymer thus recovered corresponded to 1.6% by weight of the original fermentation broth.

EXAMPLE 2

Production of Deacylated Biopolymer from Agrobacterium tumefaciens IFO 3058

One litre of clarified fermentation broth of Agrobacterium tumefaciens IFO 3058 prepared as described in Example 1, was placed in a 2 liter beaker having a mechanical stirring device and bottom nitrogen sparge. Nitrogen was bubbled slowly into the mixture for 30 minutes, with stirring, to displace oxygen. Stirring and nitrogen sparging were continued while 10 ml. of a 5% solution of potassium hydroxide was added slowly to the broth. The pH of the broth rose to 11 and remained near 11 during the course of the deacylation. After 2 hours the broth was neutralized by the addition of a 10% solution of HCl until a pH of 7.0 was reached. The polysaccharide was precipitated by the addition of 2 volumes of isopropanol. The precipitated product was filtered to remove excess isopropanol, shredded into 200 ml. of isopropanol, and after standing for 1 hour to further dehydrate the polysaccharide, was vacuum filtered under a rubber dam and air dried to yield a light tan, fibrous, pure, deacylated product.

EXAMPLE 3

$Cr^{3+}$ Gels of Agrobacterium tumefaciens IFO 3058 Biopolymer

A series of $Cr^{3+}$ ion crosslinked gels of Agrobacterium tumefaciens IFO 3058 were prepared to evaluate the gel efficiency of this product in comparison to xanthan biopolymer, a recognized product used in oil recovery as a profile modifying agent. Solutions of A. tumefaciens IFO 3058 and xanthan biopolymer were prepared at 750 ppm in a synthetic brine containing 3% NaCl and 0.3% $CaCl_2$. The polymer solutions were then treated with 100 ppm of $Cr^{3+}$, using a standard solution of 1% chromic chloride, and allowed to stand undisturbed. Gel strengths were measured at 24, 48, 72 hour, and 6 day intervals using a penetrometer equipped with a 1 cm diameter plunger. Gel strength was measured as that point where gel rupture cccurred, giving a maximum resistance to rupture in grams. Comparative gel strengths of A. tumefaciens IFO 3058 and cross-linked xanthan biopolymer are shown below.

| Gel Strength g | | | | |
|---|---|---|---|---|
| | 24h | 48h | 72h | 6 days |
| Xanthan | 2 | 2 | 5 | 33 |
| IFO 3058 Biopolymer | 30 | 99 | 110 | 131 |

EXAMPLE 4

$Cr^{3+}$ Gels of Agrobacterium radiobacter, biovar 1

$Cr^{3+}$ ion cross-linked gels of the biopolymer from several strains of Agrobacterium radiobacter, biovar 1 were prepared and assayed as described in Example 3. Gel strengths were determined after 72 hours and compared with those of xanthan biopolymer (Flocon 4800) prepared similarly.

| A. radiobacter Strain | Gel Strength (g) |
|---|---|
| ATCC 53172 | 30 |
| ATCC 53173 | 18 |
| ATCC 53028 | 18 |
| ATCC 53171 | 12 |
| ATCC 53174 | 11 |
| Xanthan | 5 |

EXAMPLE 5

$Cr^{3+}$ Gels of Deacylated Agrobacterium tumefaciens IFO 3058

Gels were also afforded by treating Agrobacterium tumefaciens IFO 3058 polysaccharide deacylated as described in Example 2 with $Cr^{3+}$. Comparative gel strengths in a 3% NaCl brine are shown below.

| Polymer | [Polymer] (ppm) | [$Cr^3$] (ppm) | Gel Strength (g) | |
|---|---|---|---|---|
| | | | 24h | 11 days |
| IFO 3058 | 1500 | 100 | 222 | 116 |
| Deacylated IFO 3058 | 1500 | 100 | 165 | 209 |

EXAMPLE 6

$Cr^{3+}$ Gels of Agrobacterium tumefaciens IFO 3058 used as profile modifying agents in enhanced oil recovery

The efficiency of A. tumefaciens IFO 3058 biopolymer as a profile modifying agent in enhanced oil recovery was measured using a laboratory sandpack apparatus to simulate downhole conditions. A standard 1" sandpack unit was prepared containing a sand mixture of various grain sizes (typically 60-200 mesh). A solution of 400 ppm IFO 3058 biopolymer in a synthetic brine of 3% $CaCl_2$ was prepared, dosed with 100 ppm of $Cr^{3+}$, and pumped into the column which was alternately flooded with oil and brine while measuring the relative permeability of the column to each. The following data were obtained showing a very effective reduction in permeability to brine while maintaining a favorable permeability to oil.

| Permeability (millidarceys) | | | | | |
|---|---|---|---|---|---|
| Before treatment | | | After treatment | | |
| $K_B$ | $K_o$ | $K_B$ | $K_B$ | $K_o$ | $K_B$ |
| 334 | 125 | 95 | 14 | 91 | 19 |

EXAMPLE 7

Examples of Succinoglycan Gelation with Various Cations

Agrobacterium tumefaciens IFO 3058 polysaccharide (2000 ppm in 3% NaCl) were mixed with 100 ppm of the appropriate cation and allowed to gel for two days. The strength of the gel is indicated below.

| Cation | Source | Gel Character |
|---|---|---|
| $Al^{3+}$ | $Al(CH_3COO)_3$ | + + + + |
| $Co^{2+}$ | $Co(NO_3)_2$ | + |
| $Cr^{3+}$ | $CrCl_3$ | + + + + |
| $Fe^{3+}$ | $FeCl_3$ | + |
| $Mn^{2+}$ | $Mn(NO_3)_2$ | + + |
| $Ni^{2+}$ | $NiSO_4$ | + |
| $Rb^+$ | RbOH | + |
| $Ru^{3+}$ | $RuCl_3$ | + + + + |
| $Sb^{5+}$ | SBE-168 | + |
| $Ti^{4+}$ | $Tyzor^R$ AA | + + + + |
| $V^{5+}$ | $VOCl_3$ | + |
| $Zr^{4+}$ | $Zirtech^R$ AA | + + + |
| + + + + = strong, firm gel | | |
| + = weak gel | | |

13

## EXAMPLE 8
### Succinoglycan Compositional Data

| Polysaccharide | | Hexose (mol)[1] | | Organic Acids (%) | | |
| --- | --- | --- | --- | --- | --- | --- |
| | | Glc | Gal | Pyruvate | Acetate | Succinate |
| A. tumefaciens | IFO 3058 | 7.5 | 1.0 | 4.6 | 0.2 | 4.3 |
| A. radiobacter | ATCC 53028 | 7.9 | 1.0 | 7.1 | 1.0 | 6.2 |
| A. radiobacter | ATCC 53171 | 8.1 | 1.0 | 4.5 | 1.0 | 6.6 |
| A. radiobacter | ATCC 53172 | 8.0 | 1.0 | 5.2 | 1.0 | 6.7 |
| A. radiobacter | ATCC 53173 | 7.4 | 1.0 | 5.8 | 1.0 | 4.9 |
| A. radiobacter | ATCC 53174 | 7.8 | 1.0 | 4.7 | 1.0 | 4.8 |
| | | | | | | |
| 2 Pseudomonas sp. | NCIB 11264 | 7.5 | 1.0 | 5.5 | 0.3 | 5.4 |
| 2 Pseudomonas sp. | NCIB 11592 | 7.3 | 1.0 | 5.9 | 0.4 | 8.7 |
| 2 A. radiobacter | ATCC 31643 | 7.4 | 1.0 | 3.0-4.0 | [2.9 – | 3.5][3] |
| 2 A. tumefaciens | IFO 3058 | 7.7 | 1.0 | 5.8 | 0.5 | 4.8 |

1. Hexoses were quantitated as their alditol acetate derivatives by gas-liquid chromatography. Organic acids were quantitated by HPLC using a Bio-Rad HPX-87H column according to the procedure of Hisamatsu et al. (Carb. Res., 61, 89-96, (1978)).

2. Data for Pseudomonas species NCIB 11264 and 11592 are from European Patent Application 0040445. Those for Agrobacterium radiobacter ATCC 31643 and Agrobacterium tumefaciens IFO 3058 are from U.S. Patent 4,269,939 and Hisamatsu et al. (Ref. as above), respectively.

3. Total o-acyl quantitated as o-acetyl.

### EXAMPLE 9

$Cr^{3+}$ Gels of Agrobacterium tumefaciens IFO 3058-Derived Polymer Used as Profile Modifying Agents in Enhanced Oil Recovery

The efficiency of A. tumefaciens IFO 3058 biopolymer as a profile modifying agent in enhanced oil recovery was measured using a laboratory sandpack apparatus to simulate down hole conditions of injector wells. A standard 1″ sandpack unit was prepared containing sand mixture of various grain sizes (typical 60-200 mesh). A solution of IFO 3058 biopolymer in a synthetic brine was prepared, dosed with the appropriate amount of $Cr^{3+}$, pumped into the column, and allowed to gel for 7 days. Following emplacement, the column was flooded with brine and the relative reduction in brine permeability was noted. The following table exemplifies the effectiveness of the gel Polymer was used in the form of ultrafiltered, whole fermentation broth, unless otherwise indicated.

| [Polymer] (ppm) | [Cr$^{3+}$] (ppm) | pH | Brine (%) | Hardness[1] (ppm) | HCO$_3^-$ (ppm) | Permeability (md) Before Treatment | After Treatment |
|---|---|---|---|---|---|---|---|
| * 400 | 48 | 6 | 10 | 500 | 0 | 633 | 34.0 |
| 400 | 48 | 6 | 10 | 500 | 0 | 514 | 2.0 |
| 700 | 12 | 7 | 1.0 | 500 | 0 | 508 | 2.5 |
| 400 | 8 | 7 | 1.0 | 500 | 0 | 550 | 2.9 |
| 400 | 12 | 4 | 6.5 | 3750 | 0 | 574 | 41.0 |
| 400 | 8 | 6 | 1.0 | 500 | 500 | 161 | 50.0 |
| 500 | 60 | 6 | 20.0 | 500 | 0 | 438 | 92.0 |

*Dried, isopropanol precipitation of whole broth.

1. Hardness was present as 3 parts Ca$^{++}$ to every 1 part Mg$^{++}$.

## Claims

1. A gel-forming composition comprising an aqueous fluid having incorporated therein (a) a gel-forming amount of a succinoglycan polymer and (b) an effective amount of at least one water-soluble polyvalent

16

metal cation capable of cross-linking said succinoglycan polymer.

2. A composition according to claim 1 wherein said metal cation is selected from the group consisting of aluminum (III), chromium (III), ruthenium (III), titanium (IV) and zirconium (IV).

3. A composition according to claim 2, wherein said metal cation is chromium (III).

4. A composition according to claim 2 wherein said metal cation is aluminum (III).

5. A composition according to claim 2 wherein said metal cation is titanium (IV).

6. A composition according to claim 1, wherein the succinoglycan is obtained by cultivation of a succinoglycan-producing microorganism of the genus Agrobacterium, Alcaligenes, Pseudomonas or Rhizobium.

7. A composition according to claim 6 wherein the succinoglycan is produced by cultivation of a succinoglycan-producing microorganism of the genus Agrobacterium.

8. A composition according to claim 7 wherein said microorganism is a succinoglycan-producing strain of Agrobacterium radiobacter, biovar 1, or Agrobacterium tumefaciens, IFO 3058, or mutants thereof.

9. A composition according to claim 1 wherein said succinoglycan polymer is a deacylated succinoglycan polymer.

10. A biologically pure culture of a microorganism selected from the group consisting of:
    Agrobacterium radiobacter, biovar 1, ATCC 53028;
    Agrobacterium radiobacter, biovar 1, ATCC 53171;
    Agrobacterium radiobacter, biovar 1, ATCC 53172;
    Agrobacterium radiobacter, biovar 1, ATCC 53173;
    Agrobacterium radiobacter, biovar 1, ATCC 53174;
    and mutants thereof;
    said microorganism having the ability to produce a succinoglycan polymer.

11. A method of forming an aqueous gel composition, useful in the recovery of hydrocarbons from hydrocarbon-bearing subterranean formations which comprises combining
    a) a gel-forming amount of a succinoglycan biopolymer;
    b) an amount sufficient for cross-linking said succinoglycan biopolymer of at least one water-soluble, polyvalent metal cation effective for cross-linking said succinoglycan biopolymer; and
    c) an aqueous fluid,
    and thereafter allowing the mixture thus obtained to gel.

12. A method according to claim 11 wherein said metal cation is chromium (III).

13. A method according to claim 11 wherein said metal cation is aluminum (III).

14. A method according to claim 11 wherein said metal cation is titanium (IV).

15. A method for the selective reduction of the permeability of the strata of a subterranean hydrocarbon-bearing formation which comprises introducing into a well in communication with said formation
    a) a gel-forming amount of a succinoglycan biopolymer;
    b) an amount sufficient for cross-linking said succinoglycan biopolymer of at least one water-soluble polyvalent metal cation effective for cross-linking said succinoglycan biopolymer; and
    c) an aqueous fluid
    and thereafter shutting-in said well and allowing components (a), (b) and (c) to form a gel.

16. A method according to claim 15 wherein said metal cation is chromium (III).

17. A method according to claim 15 wherein said metal cation is aluminum (III).

17

**18.** A method according to claim 15 wherein said metal cation is titanium (IV).

**Revendications**

**1.** Composition formant un gel, comprenant un fluide aqueux renfermant (a) une quantité, apte à former un gel, d'un polymère de succinoglycane et (b) une quantité efficace d'au moins un cation métallique polyvalent hydrosoluble capable de provoquer la réticulation dudit polymère de succinoglycane.

**2.** Composition suivant la revendication 1, dans laquelle le cation métallique est choisi dans le groupe comprenant l'aluminium (III), le chrome (III), le ruthénium (III), le titane (IV) et le zirconium (IV).

**3.** Composition suivant la revendication 2, dans laquelle le cation métallique est le chrome (III).

**4.** Composition suivant la revendication 2, dans laquelle le cation métallique est l'aluminium (III).

**5.** Composition suivant la revendication 2, dans laquelle le cation métallique est le titane (IV).

**6.** Composition suivant la revendication 1, dans laquelle le succinoglycane est obtenu par culture d'un micro-organisme producteur de succinoglycane appartenant au genre Agrobacterium, Alcaligenes, Pseudomonas ou Rhizobium.

**7.** Composition suivant la revendication 6, dans laquelle le succinoglycane est produit par culture d'un micro-organisme producteur de succinoglycane appartenant au genre Agrobacterium.

**8.** Composition suivant la revendication 7, dans laquelle le micro-organisme est une souche productrice de succinoglycane de Agrobacterium radiobacter, biovar 1, ou de Agrobacterium tumefaciens, IFO 3058, ou bien d'un de leurs mutants.

**9.** Composition suivant la revendication 1, dans laquelle le polymère de succinoglycane est un polymère de succinoglycane désacylé.

**10.** Culture biologiquement pure d'un micro-organisme choisi dans le groupe comprenant :
Agrobacterium radiobacter, biovar 1, ATCC 53028;
Agrobacterium radiobacter, biovar 1, ATCC 53171;
Agrobacterium radiobacter, biovar 1, ATCC 53172;
Agrobacterium radiobacter, biovar 1, ATCC 53173;
Agrobacterium radiobacter, biovar 1, ATCC 53174;
et leurs mutants;
ledit micro-organisme Présentant l'aptitude à produire un polymère de succinoglycane.

**11.** Procédé de formation d'une composition de gel aqueux, utile dans la récupération d'hydrocarbures de gisements souterrains d'hydrocarbures, qui consiste à mélanger
a) une quantité, apte à la formation d'un gel, d'un biopolymère de succinoglycane;
b) une quantité suffisante pour la réticulation dudit biopolymère de succinoglycane d'au moins un cation métallique polyvalent hydrosoluble efficace pour provoquer la réticulation dudit biopolymère de succinoglycane ; et
c) un fluide aqueux,
puis à laisser s'effectuer la gélification du mélange ainsi obtenu.

**12.** Procédé suivant la revendication 11, dans lequel le cation métallique est le chrome (III).

**13.** Procédé suivant la revendication 11, dans lequel le cation métallique est l'aluminium (III).

**14.** Procédé suivant la revendication 11, dans lequel le cation métallique est le titane (IV).

**15.** Procédé de réduction sélective de la perméabilité des strates d'un gisement souterrain d'hydrocarbures, qui consiste à introduire dans un puits en communication avec ledit gisement
a) une quantité, apte à la formation d'un gel, d'un biopolymère de succinoglycane,

18

b) une quantité, suffisante pour provoquer la réticulation dudit biopolymère de succinoglycane, d'au moins un cation métallique polyvalent hydrosoluble efficace pour provoquer la réticulation dudit biopolymère de succinoglycane ; et

c) un fluide aqueux

et à fermer ensuite ledit puits et à laisser les constituants (a), (b) et (c) former un gel.

**16.** Procédé suivant la revendication 15, dans lequel le cation métallique est le chrome (III).

**17.** Procédé suivant la revendication 15, dans lequel le cation métallique est l'aluminium (III).

**18.** Procédé suivant la revendication 15, dans lequel le cation métallique est le titane (IV).

**Patentansprüche**

**1.** Gelbildende Zusammensetzung umfassend ein wässeriges Fluid, das (a) eine gelbildende Menge eines Succinoglykanpolymers und (b) eine wirksame Menge wenigstens eines wasserlöslichen mehrwertigen Metallkations, das zum Vernetzen des Succinoglykanpolymers imstande ist, darin einverleibt aufweist.

**2.** Zusammensetzung nach Anspruch 1, wobei das Metallkation aus der Gruppe bestehend aus Aluminium (III), Chrom (III), Ruthenium (III), Titan (IV) und Zirkonium (IV) ausgewählt ist.

**3.** Zusammensetzung nach Anspruch 2, wobei das Metallkation Chrom (III) ist.

**4.** Zusammensetzung nach Anspruch 2, wobei das Metallkation Aluminium (III) ist.

**5.** Zusammensetzung nach Anspruch 2, wobei das Metallkation Titan (IV) ist.

**6.** Zusammensetzung nach Anspruch 1, wobei das Succinoglykan durch Kultivierung eines succinoglykanproduzierenden Mikroorganismus der Gattung Agrobacterium, Alcaligenes, Pseudomonas oder Rhizobium erhalten wird.

**7.** Zusammensetzung nach Anspruch 6, wobei das Succinoglykan durch Kultivierung eines succinoglykanproduzierenden Mikroorganismus der Gattung Agrobacterium erhalten wird.

**8.** Zusammensetzung nach Anspruch 7, wobei der Mikroorganismus ein succinoglykanproduzierender Stamm von Agrobacterium radiobacter, biovar 1 oder Agrobacterium tumefaciens, IFO 3058, oder Mutanten hievon ist.

**9.** Zusammensetzung nach Anspruch 1, wobei das Succinoglykanpolymer ein deacyliertes Succinoglykanpolymer ist.

**10.** Biologisch reine Kultur eines aus der aus

Agrobacterium radiobacter, biovar 1, ATCC 53028;
Agrobacterium radiobacter, biovar 1, ATCC 53171;
Agrobacterium radiobacter, biovar 1, ATCC 53172;
Agrobacterium radiobacter, biovar 1, ATCC 53173;
Agrobacterium radiobacter, biovar 1, ATCC 53174

und Mutanten hievon

bestehenden Gruppe ausgewählten Mikroorganismus, wobei der Mikroorganismus die Fähigkeit besitzt, ein Succinoglykanpolymer zu produzieren.

**11.** Verfahren zur Bildung einer wässerigen Gelzusammensetzung, die bei der Gewinnung von Kohlenwasserstoffen aus kohlenwasserstoffhaltigen unterirdischen Formationen verwendbar ist, umfassend das Vereinigen

a) einer gelbildenden Menge eines Succinoglykanbiopolymers,

b) einer zur Vernetzung des Succinoglykanbiopolymers ausreichenden Menge wenigstens eines wasserlöslichen mehrwertigen Metallkations, das zum Vernetzen des Succinoglykanbiopolymers imstande ist, und

c) eines wässerigen Fluids,

und das anschließende Gelierenlassen der so erhaltenen Mischung.

12. Verfahren nach Anspruch 11, in dem das Metallkation Chrom (III) ist.

13. Verfahren nach Anspruch 11, in dem das Metallkation Aluminium (III) ist.

14. Verfahren nach Anspruch 11, in dem das Metallkation Titan (IV) ist.

15. Verfahren zur selektiven Verringerung der Durchlässigkeit der Schichten einer unterirdischen kohlenwasserstoffhaltigen Formation, umfassend das Einbringen

a) einer gelbildenden Menge eines Succinoglykanbiopolymers,

b) einer zur Vernetzung des Succinoglykanbiopolymers ausreichenden Menge wenigstens eines wasserlöslichen mehrwertigen Metallkations, das zum Vernetzen des Succinoglykanbiopolymers wirksam ist, und

c) eines wässerigen Fluids

in ein mit der Formation in Verbindung stehendes Bohrloch und das anschließende Verschließen des Bohrlochs und Gelierenlassen der Komponenten (a), (b) und (c).

16. Verfahren nach Anspruch 15, in dem das Metallkation Chrom (III) ist.

17. Verfahren nach Anspruch 15, in dem das Metallkation Aluminium (III) ist.

18. Verfahren nach Anspruch 15, in dem das Metallkation Titan (IV) ist.